# EUROPEAN PATENT SPECIFICATION

(11) **EP 2 391 084 B1**
(45) Date of publication and mention of the grant of the patent: **15.10.2014**
(21) Application number: 10305569.5
(22) Date of filing: 31.05.2010
(51) Int. Cl.: H04L 29/06

(54) **A system and method for improving latency in an IP network**
System und Verfahren zur Verbesserung der Latenz in einem IP-Netzwerk
Système et procédé pour améliorer la latence dans un réseau IP

(43) Date of publication of application: 30.11.2011
(73) Proprietor: ALCATEL LUCENT, 92100 Boulogne-Billancourt (FR)
(72) Inventor: Gopal, Ravikumar, 600032, CHENNAI, TAMILNADU (IN); Mudakkayil, Vijay, 600032, CHENNAI, TAMILNADU (IN)
(74) Representative: Sciaux, Edmond

(56) References cited:
- US-A1- 2005 198 681
- AMIRANTE UNIVERSITY OF NAPOLI T CASTALDI L MINIERO MEETECHO S P ROMANO UNIVERSITY OF NAPOLI A: "Media Control Channel Framework (CFW) Call Flow Examples; draft-ietf-mediactrl-call-flows-04.txt" 17 May 2010 (2010-05-17), MEDIA CONTROL CHANNEL FRAMEWORK (CFW) CALL FLOW EXAMPLES; DRAFT-IETF-MEDIACTRL-CALL-FLOWS-04.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, PAGE(S) 1 - 159 , XP015068565 , pages 1-159 [retrieved on 2010-05-17] * page 4 - page 13 * * page 20 - page 22 * * page 63 - page 67 * * page 94 - page 100 * * page 105 - page 111 *
- BURKE GOOGLE M SCOTT GENESYS D: "SIP Interface to VoiceXML Media Services; rfc5552.txt" 1 May 2009 (2009-05-01), SIP INTERFACE TO VOICEXML MEDIA SERVICES; RFC5552.TXT, INTERNET ENGINEERING TASK FORCE, IETF; STANDARD, INTERNET SOCIETY (ISOC) 4, RUE DES FALAISES CH- 1205 GENEVA, SWITZERLAND , XP015065589 , pages 1-36 [retrieved on 2009-05-19] * page 3 - page 22 *
- VAN DYKE CANTATA TECHNOLOGY J ET AL: "Media Server Control Markup Language (MSCML) and Protocol; rfc5022.txt" IETF STANDARD, INTERNET ENGINEERING TASK FORCE, IETF, CH, 1 September 2007 (2007-09-01), pages 1-81, XP015055094

## Description

### TECHNICAL FIELD

The present invention relates to Internet Protocol (IP) networks and, more particularly, to minimizing latency in IP networks.

### BACKGROUND

Data is sent in the form of data packets across packet networks. When sending data across packet networks, the data is usually compressed, packetized and fmally sent across the network to the destination. When packets are sent through the network, they are generated at a constant rate. However, sometimes due to the behavior of the packet network, the time intervals between the packets are lost as the packet transits the network. This irregularity in packet separation is referred to as jitter. Jitter causes delays, clicks and other annoyances in multimedia transmission, creating poor quality of the output data. In order to improve the quality of the output, jitter buffers are employed. The jitter buffer's task is to collect enough packets to allow the slowest packet to arrive in time to be played out in the correct sequence. Some of the other common features of a jitter buffer are detection of missing packets, detection of redundant packets, re-sequencing of packets (e.g. packets that arrived out of order will be rearranged and played out in the proper order) and so on.

Static large jitter buffers are employed to minimize the delays in transmission. Static jitter buffers are designed to optimize performance against large amounts of network delay jitters at the cost of large delays, which will be noticed by the users. On the other hand, small jitter buffers can be used which will introduce minimal delays but result in significant packet loss. In such cases, the call quality degrades when the network jitter exceeds the size of the jitter buffer.

When the user uses any of the interactive media features, the jitter buffers employed in the media path need to be flushed out before playing a new media stream as selected by the user. Before flushing the jitter buffer, the media server needs to communicate with the logic implemented on the application server. The drawback faced is that the other media entities that are in the media path do not have direct access to the logic implemented on the application server. Thus, they would continue to play the old media stream. However, the user expects a new media stream immediately, based on the interactive input provided by the user. Since a direct signaling path may not exist between the application server and the media gateway the message will have to pass through different signaling entities like the proxy servers, application servers etc this would have an adverse effect on the customer perceived latency.

Some mechanisms employ SIP for sending messages. In such mechanisms, the application server detects the interactive inputs received from the media server and sends SIP information message to the media gateway and could instruct to clear the jitter buffer. In addition, there are problems with usage of SIP information such as lack of interoperability, inappropriateness and incorrectness.

The IETF draft "Media Control Channel Framework (CFW) Call Flow examples" relates to providing media in a decomposed architecture. The patent application US 2005/01498681 A1 relates to timestamps-triggered buffer flushing.

### SUMMARY

The objects of the invention are achieved by means of the features of the appended independent claims.

In view of the foregoing, an embodiment herein provides an Internet Protocol (IP) network comprising of a media server configured for receiving a message from a user for negotiation of an action input by the user, checking with an application server if a user input action is permitted on obtaining the input from the user, sending a response message for the negotiated action indicating the user input action is acceptable, sending a message to a media gateway for performing the user input action, if the input action is permitted, receiving a notification from the media gateway on performing the action on the media stream. An application server configured for checking if user input action is permitted on the media stream, sending a reply to the media server on completion of checking. The network comprises a Text to Speech (TTS) converter configured for converting text format in the media stream to speech. The network comprises an Automatic Speech Recognition (ASR) server configured for recognition of audio in the media stream. The network is configured to send message is in the form of Real Time Control Protocol (RTCP) message.

Embodiments further disclose a media server in a Internet Protocol (IP) network configured for receiving a message from a user for negotiation of an action input by the user, checking with an application server if user input action is permitted, on receiving an input from the user to perform an action on a media stream, sending a response message for the negotiated action indicating the user input action is acceptable, sending a message to a media gateway for performing the user input action on the media stream on receiving a confirmation from the application server stating the user input action is permitted and receiving a notification from the media gateway indicating that the user input action is performed on the media stream. The media server is configured to receive notification from the media gateway in the form of RTCP packet.

Embodiments herein also disclose an application server in Internet Protocol (IP) network configured for checking if the user input action is permitted on the media stream and sending a reply to the media server if the user input action is permitted. The application server is configured to store settings preferred by the user.

A method in an Internet Protocol (IP) network, the network comprising of a media gateway, a media server, and an application server, further the method comprising steps of media gateway sending user's input action to the media server for negotiation of the action, the media server configured for sending a request message to the application server for checking if user input action is permitted on the media stream, media server sending a response message to the user indicating the action is negotiated, performing the user input action on the media stream, sending a message to the media gateway for performing the input action on the media stream and the media gateway sending a notification to the media server on completion of the user input action. The method wherein said user input action is at least one of pause, stop, forward, clear. The user input action is performed on the media stream by media gateway at mid way of playing media stream. The media stream is one of audio, text or video. The method wherein hotword process is employed when the input is audio. The notification sent to the media server is a RTCP APP packet.

A method in an Internet Protocol (IP) network for negotiation of capabilities. The network comprising of a media gateway, a media server, and an application server, further the method comprising steps of a first user sending capabilities for negotiation in an input message to a second user, the second user sending a response message for negotiation, the second user sending the response message to the application server and application server sending a Real Time Control Protocol (RTCP) message to the media server for performing the negotiated action. The RTCP packet structure comprises packet name, application dependent data and timestamp of the RTCP packet. The additional capabilities are added in the form of attributes. The timestamp is used to categorize if the media stream is new media stream or old media stream.

These and other aspects of the embodiments herein will be better appreciated and understood when considered in conjunction with the following description and the accompanying drawings.

### BRIEF DESCRIPTION OF THE FIGURES

The embodiments herein will be better understood from the following detailed description with reference to the drawings, in which:

FIG. 1 illustrates a system architecture to reduce jitter in an Internet Protocol (IP) network, according to embodiments as disclosed herein;

FIG. 2 is a flow chart depicting the process of reducing jitter, according to embodiments as disclosed herein;

FIG. 3 illustrates a CLJB packet structure, according to embodiments as disclosed herein;

FIG. 4 is a flow chart depicting the method of negotiating capabilities using SIP offer-answer model, according to embodiments as disclosed herein;

FIG. 5 is a sequence diagram illustrating the process of immediate barge-in for Dual Tone Multiple Frequency (DTMF), according to embodiments as disclosed herein;

FIG. 6 is a sequence diagram illustrating hot word process for voice, according to embodiments as disclosed herein;

FIG. 7 illustrates an example for RTCP APP packet for barge-in from the media server, according to embodiments as disclosed herein;

FIG. 8 illustrates an example for RTCP APP packet for prompt end of data, according to embodiments as disclosed herein;

FIG. 9 illustrates an example for RTCP APP packet for Media gateway response to barge-in, according to embodiments as disclosed herein;

FIG. 10 an example for RTCP APP packet for Media gateway response to prompt end of data, according to embodiments as disclosed herein; and

FIG. 11 illustrates an example for RTCP APP packet for Media gateway time out, according to embodiments as disclosed herein.

### DETAILED DESCRIPTION OF EMBODIMENTS

The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

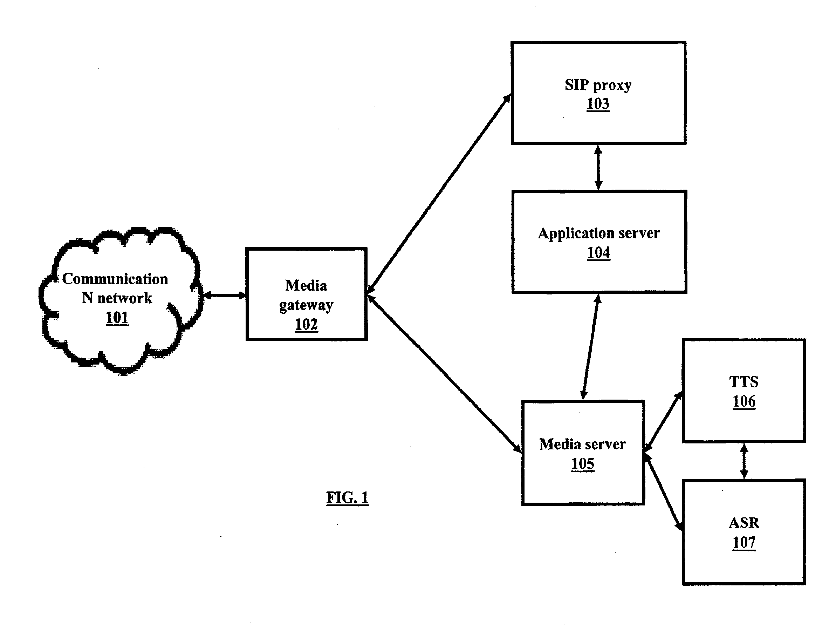

The embodiments herein disclose a means for reducing latency in IP network by removing the effects of jitter from the media stream. Referring now to the drawings, and more particularly to FIGS. 1 through 11, where similar reference characters denote corresponding features consistently throughout the figures, there are shown embodiments.

A system and method for reducing latency in IP networks is disclosed. Latency is eliminated by removing the effects of jitter in the media stream by employing jitter buffer. The method is based on Real Time Control Protocol (RTCP) APP packet defined as Clear Jitter Buffer (CLJB). When a media stream is being played, and a command is issued to clear the jitter buffer, the command is sent to the media server. The media server receives the user interactive input and checks the business logic implemented in the application server. If the business logic on the application server allows the interruption of the media stream, the media server may send the newly defined CLJB packet to other media entities like the media gateway, directing the media gateway to stop playing the media stream and flush its jitter buffer. The jitter buffers are then flushed and the new input media content is loaded to be played. Hence, the jitter in the media stream is reduced and latency involved in the packet transmission is also reduced. In case, the user chooses to flush the buffer midway when a media file is being played, the remaining part of the media file is not played. The media server will clear the file it is playing and also send RTCP APP packet to the media gateway to clear any pre-filled data buffer.

FIG. 1 illustrates system architecture to reduce jitter in an Internet Protocol (IP) network, according to embodiments as disclosed herein. The embodiments herein are described with reference to IP networks however can be extended to other networks as well. The system comprises of a communication network 101, a media gateway 102, a media server 105, and a SIP proxy 103 and an Application Server (AS) 104. In addition the system may also comprise of a Text to Speech Converter (TTS) 106 and an Automatic Speech Recognition (ASR) server 107. The media server 105, TTS 106 and the ASR server 107 together form the media layer of the communication network 101. The SIP proxy 103 and the Application server 104 together constitute the signaling layer of the communication network 101. The communication network 101 acts as a medium for transmission of the data packets. The data packets are passed to and from the network elements through the communication network 101. Data packets can refer to media content, files, audio, video and the combination thereof.

The media gateway 102 acts as a signaling path for the messages to be sent to and from the communication network 101 and the system components. The media gateway 102 is a translation device or a service that converts digital media streams between disparate telecommunications networks such as PSTN, SS7 etc. Media streaming functions such as echo cancellation, DTMF, and tone sender are also located in the media gateway 102. When the user inputs his option to use interactive media features such as barge-in, the jitter buffers in the media path need to be flushed on various media devices. The media server 105 on receiving the command from the user checks the business logic on the application server 104. If the business logic allows, the media server sends a CLJB APP packet to the media gateway 102. The media gateway 102 on receiving the CLJB APP packet stops playing the media stream and clears the media stream.

In case of voice recording, the system may also comprise of a TTS 106 and an ASR server 107. The TTS 106 is a converter that converts text format into speech i.e., voice and stores it. The TTS 106 may convert text to voice in any suitable codec format like G711-Mu, G723 and so on. The converted speech may be stored. When the media server 105 receives an instruction to play a prompt from the application server in text format, the media server 105 sends it to the TTS 106. The TTS 106 then converts the text into required voice format.

The ASR server 107 performs the opposite function of the TTS 106. ASR server 107 recognizes speech and may also convert speech into text format and store it. When the media server 105 receives any unrecognizable media type, the media server 105 sends the media type to the ASR server 107. The ASR server 107 recognizes the speech in the media format and converts it into suitable text format.

The application server 104 is dedicated to efficient handling of procedures for supporting the construction of the various applications and business logic running on it. The application server 104 handles the flushing of the jitter buffers according to the business code implemented in the application server 104. The media server 105 checks the business logic on the application server 104 to determine if the business logic allows interruption of the media. If the business logic allows interrupting the media, then the jitter buffer is flushed.

The SIP proxy server 103 is an intermediary entity that acts as both a server and a client for the purpose of making requests on behalf of other clients. A proxy server primarily plays the role of routing, which means its job is to ensure that a request is sent to another entity closer to the targeted user. A proxy server 103 interprets, and, if necessary, rewrites specific parts of a request message before forwarding it. The proxy server 103 is interfaced with the application server 104 and may take over the functioning of the application server 104 when required.

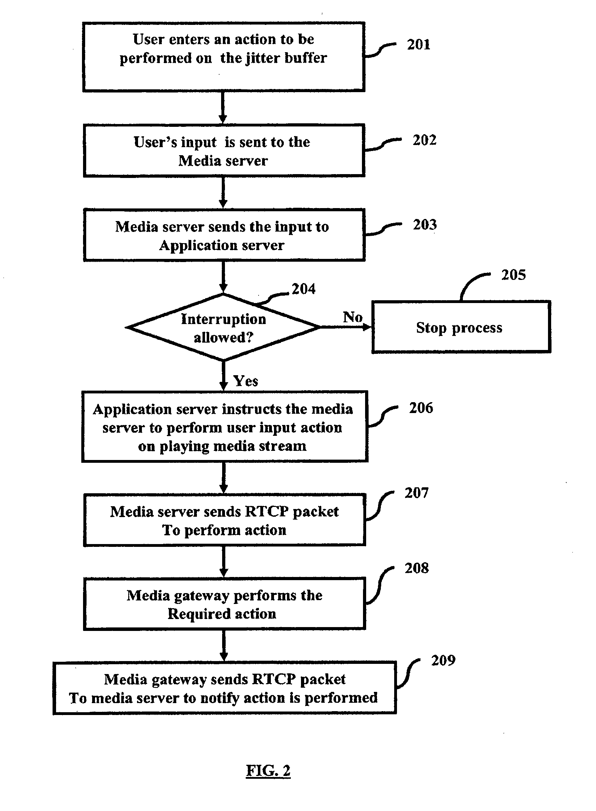

FIG. 2 is a flow chart depicting the process of reducing jitter, according to embodiments as disclosed herein. A media stream is played on the media server 105. The user enters (201) an input action to be performed on the media stream in the jitter buffer. User may want to pause a media file being played currently, forward the media file, stop the playing or clear the media file from the jitter buffer. User's input to perform action is sent (202) to the media server 105 by the media gateway 102. The media server 105 then sends (203) the user's option to the application server 104 to check the settings on the application server 104. A check (204) is made with the business logic implemented on the application server 104 as to if the logic allows interruption of the media stream being played currently. If the logic does not allow interruption of the media stream, the process is stopped (205). In case, the logic allows the interruption of media stream the application server sends (206) an instruction to the media server 105 instructing the media server 105 to stop playing the media stream, if the user has chosen to stop the media stream. The media server 105 then sends (207) a RTCP APP packet to the media gateway 102 to perform the action chosen by the user. On receiving the RTCP APP packet, the media gateway 102 performs (208) the required action on the media stream. In an example, user may want to pause a media stream currently being played on the media server 105. The user then sends a pause command in his input to the media server 105. On receiving the input action, the media server 105 pauses' the currently played media stream. In case the user wants to stop playing the current media stream and play a new media stream, the user may send a stop command in the input. The media server 105 on receiving the input from the user may clear the jitter buffer in the media server 105. In addition, the media server 105 sends a RTCP packet to the media gateway 102 to clear the jitter buffer of the media gateway 102. Further, the media gateway 102 sends (209) a RTCP packet to the media server 105 notifying the media server 105 that it has performed required action on the media stream. The various actions in method 200 may be performed in the order presented, in a different order or simultaneously. Further, in some embodiments, some actions listed in FIG. 2 may be omitted.

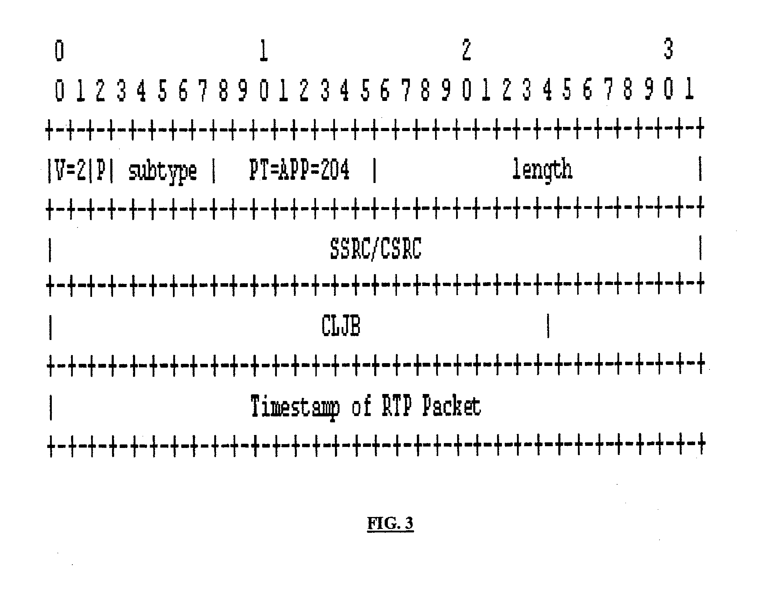

FIG. 3 illustrates a CLJB packet structure, according to embodiments as disclosed herein. The packet Name is CLJB (Clear Jitter Buffer), application-dependent data: Timestamp of RTP Packet: 4 octets. The field contains the timestamp of the RTP packet sent just before sending the APP packet. This timestamp differentiates between the RTP packet coming for stopped prompt (delayed packet of old prompt) and the RTP packet coming for new prompt. Any RTP packet received with timestamp less than or equal to the timestamp in APP packet will be flushed from the buffer and any RTP packet with timestamp more than the one specified in the RTCP APP packet will be considered for a new prompt. The Jitter Buffer clearance capabilities may be negotiated before the establishment of the call. The standard mechanism for negotiation is using SIP offer-answer model.

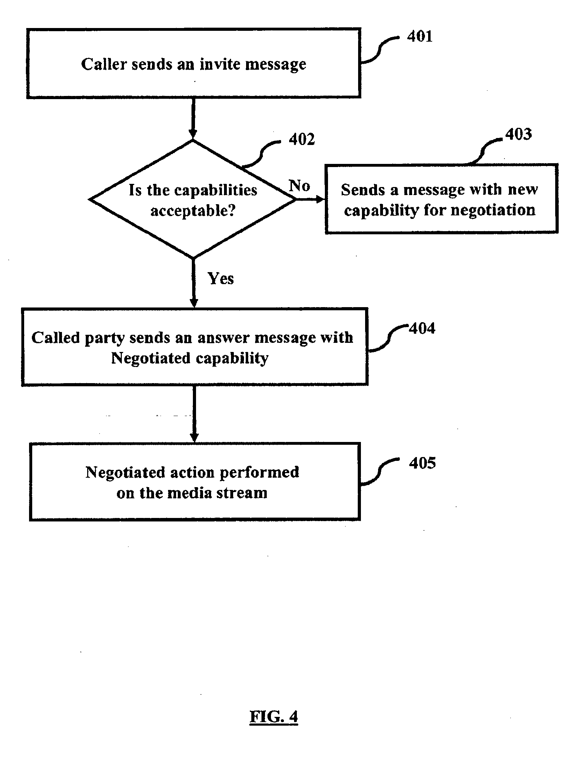

FIG. 4 is a flow chart depicting the method of negotiating capabilities using SIP offer-answer model, according to embodiments as disclosed herein. In this model, the caller who wants to perform some action on the media stream may initiate a call by sending (401) an invite message. The invite message may also include capabilities proposed by the caller. Capabilities include an instruction to clear the media stream in the jitter buffer, pausing the media stream and the like. Capabilities may be new features added in the form of attributes in the invite message and the like. Attributes are represented by 'a='. Whatever feature needs to be added, it should be as an attribute. The SDP has some standard features using this attribute. Whenever a new feature is introduced the attribute may start with 'X-'. In an example, if the new feature for negotiation is 'ClearJitterBuffer', the new feature can be embedded in the invite message and sent to the called party for negotiation. So for negotiating Jitter Buffer clearance an attribute 'a=X-ClearJitterBuffer' would be used. When the Media Gateway or Media component initiates a call, it may add an attribute 'a=X-ClearJitterBuffer' into its SDP in the OFFER message which is embedded into INVITE message and send out. If the other end also supports the feature then it may respond back with attribute 'a=X-ClearJitterBuffer' in its ANSWER message and embed it in 200 OK message. Further, a check is made (402) if the capabilities proposed by the caller are acceptable by the called party. If the capabilities proposed by the caller are not acceptable by the called party, the called party may send (403) new capabilities in a response message to the caller. In case the capabilities are acceptable to the called party, the called party sends (404) an ANSWER, message indicating acceptance to the caller. The capabilities are thus negotiated by both the parties. Once the capabilities are negotiated, both parties can be sure that the features they invoke will be supported by the other end. Further, the negotiated capability (action) is performed (405) on the media stream. The various actions in method 400 may be performed in the order presented, in a different order or simultaneously. Further, in some embodiments, some actions listed in FIG. 4 may be omitted.

In an embodiment, as the 'Jitter Buffer clearance' feature is media related functionality, the feature may be negotiated using Session Description Protocol (SDP). SDP has a standard way to extend it in order to accommodate new features by using Attributes. During SDP negotiation, Media gateway 102 may be the only party requesting the capability on the media server 105 side to send faster than real time RTP packets and enable RTCP APP packet. The Media gateway 102 may attach the request in offer SDP when the SDP initiates the call or answer SDP when media server 105 initiates the call. The media server 105 should not be expressing any Media gateway 102 capability because the request could be rejected by other gateways. A generic value is introduced as 'a =' and the generic value contains the capability in the form of `a= X-GENESYS-PSTN-C': Attrl=Valuel; Attr2=Value2. Where Attr1, Attr2 indicate attribute values. In an example, v= 0, o= m, handley 29749572 34345553 IN IP4 224.3.44.42, c= IN IP4 224.3.53.34/127, a= X-GENESYS-PSTN-C: prefill=2000; m= audio 56338 RTP/AVP 0. Upon receiving such request, the media server 105 may activate the capability for Media gateway 102 by sending 2000 ms of data ahead of time and handling RTCP APP packet accordingly.

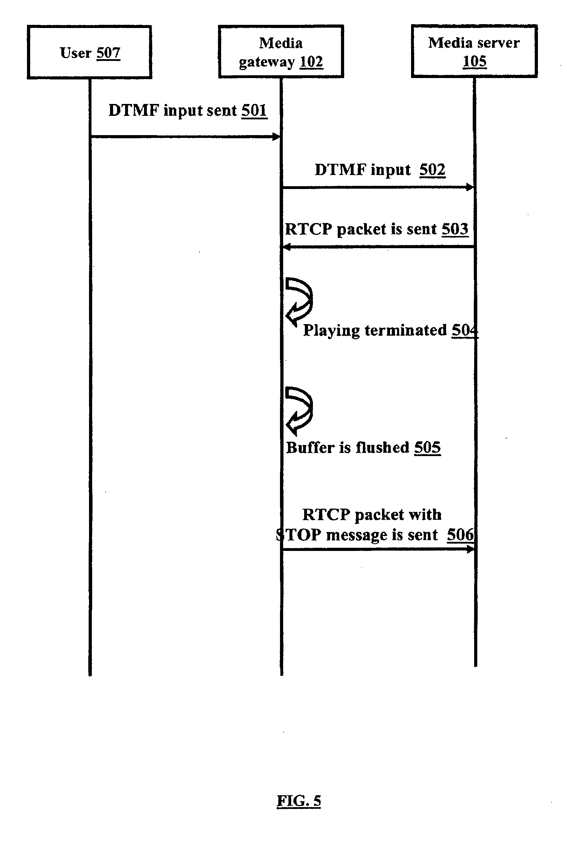

FIG. 5 is a sequence diagram illustrating the process of immediate barge-in for Dual Tone Multiple Frequency (DTMF), according to embodiments as disclosed herein. Consider media type being played is DTMF media type. When the user 507 enters an input that may be a DTMF tone, the input is sent (501) to the media gateway 102. The media gateway 102 sends (502) the input to the media server 105. Media server 105 checks with the application server 104 if the prompt is to be stopped playing. If yes, the media server 105 flushes its own buffer. The media server 105 then sends (503) an RTCP packet to the Media gateway 102. The RTCP packet includes a command to flush the jitter buffer contents. The Media gateway 102 on receiving the RTCP packet decodes the packet to determine if the media stream has to be stopped and the jitter buffer is to be cleared. The Media gateway 102 then terminates (504) the playing of the media stream. Control signals are sent and the buffer is flushed (505) irrespective of if the media stream is played completely or not. Further, the RTCP message with STOP signal is sent to the media server 105 by the Media gateway 102. On receiving the STOP signal, the media server knows that the last prompt is flushed completely and starts playing (506) next prompt.

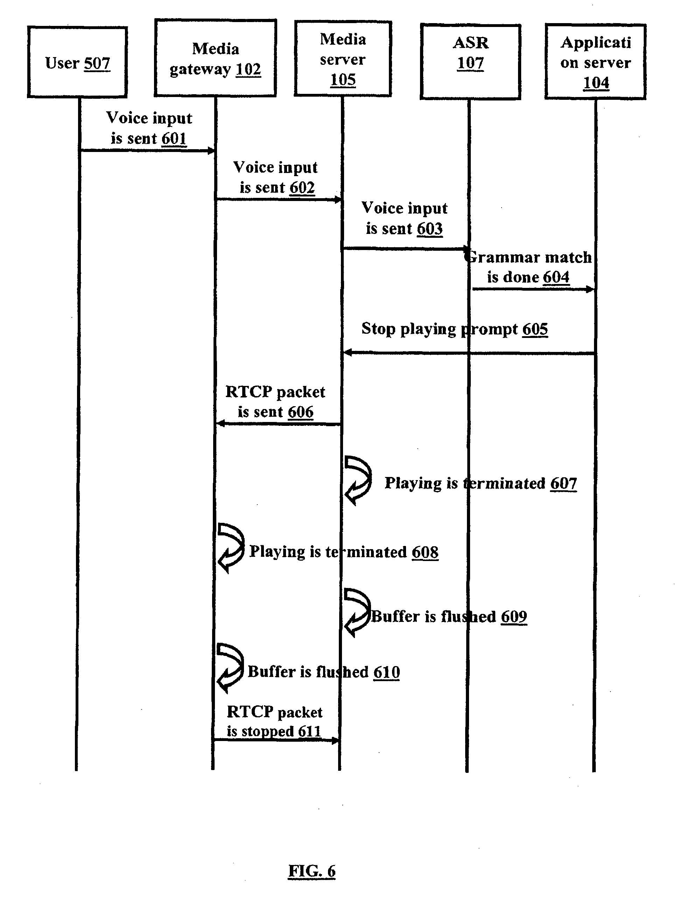

FIG. 6 is a sequence diagram illustrating hot word process for voice, according to embodiments as disclosed herein. A voice media stream is required to be cleared to eliminate jitters. When the user 507 wants to stop playing the prompt that is currently played; he may use media type voice as hotword. The input which may be a voice may be sent (601) to the media gateway 102 indicating of the input. The media gateway on receiving input from the user 507 may send (602) the input to media server 105. The media server 105 on receiving the input checks for the business logic, if the hotword need to be used. The media server 105 then sends (603) the input received to the ASR 107 for recognition of the voice stream. The ASR server 107 is employed for the purpose of recognizing speech (voice) based media stream. Media server 105 may then send grammars to the ASR server 107. The ASR server 107 then may recognize the voice and match (604) with the grammar provided by the media server 105. During grammar match, the voice tone is compared with the standard samples for recognizing the voice. On completion of grammar matching, the ASR server 107 notifies the media server 105 that grammar is matched (605). The media server 105 then checks with the business logic on the application server 104. The media server 105 checks if the business logic allows interruption of the media stream current played. In case, the business logic allows interruption of the media stream, the media server 105 sends (606) a RTCP APP packet to the Media gateway 102. The RTCP APP packet is sent along with an indication of barge-in feature. The media server 105 further stops playing (607) the media steam. Further, the Media gateway 102 terminates (608) the playing of the media stream. Media server 105 flushes (609) its own jitter buffer. The Media gateway 102 also flushes (610) the jitter buffer. Further, a RTCP APP packet with STOP message is exchanged (611) between the Media gateway 102 and the media server 105.

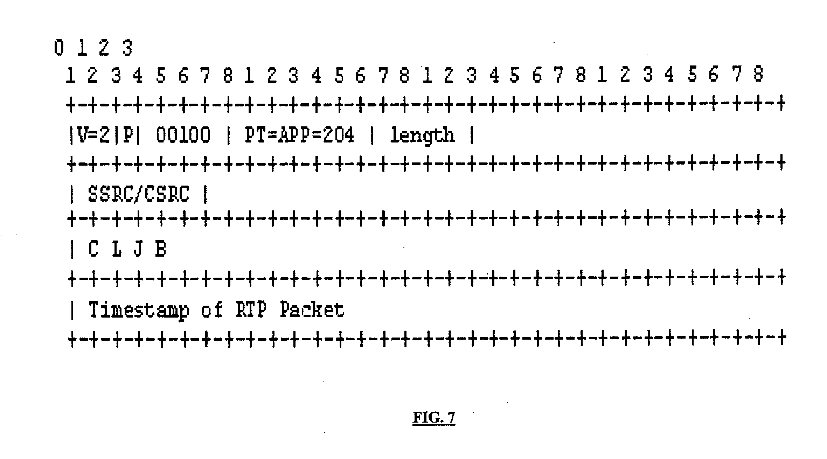

FIG. 7 illustrates an example for RTCP APP packet for barge-in from the media server, according to embodiments as disclosed herein. The proposal requires media server 105 to issue RTCP APP packet for the Barge-in event to Media gateway 102. Whenever the media server 105 receives a Barge-in request, the media server 105 may have to issue the RTCP APP packet and wait for a response from the Media gateway 102 which is required for the media server 105 to process Barge-in properly. In the example, the direction is from the media server 105 to the Media gateway 102. The subtype is b00100. Name is CLJB. The command is also issued when a VCR control has been executed and the media server 105 wants the Media gateway 102 to flush the jitter buffer. Timestamp of RTP packet is the timestamp (in network order) of the packet sent before sending the RTP App packet

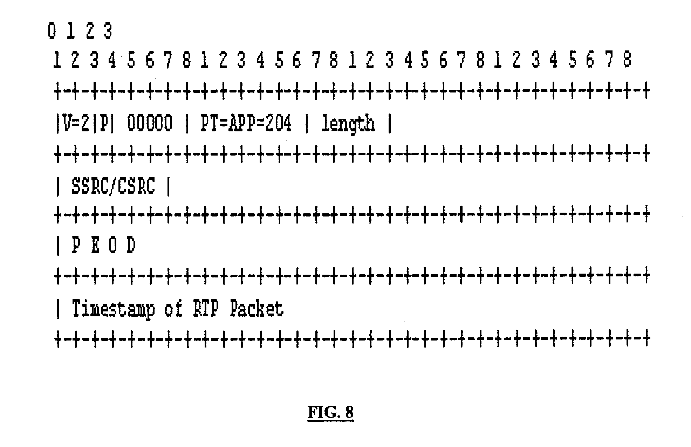

FIG. 8 illustrates an example for RTCP APP packet for prompt end of data, according to embodiments as disclosed herein. In order to indicate end of data from the media server 105 to the Media gateway 102, the media server 105 may have to issue an RTCP APP Packet to the Media gateway 102 and wait for a response from the Media gateway 102. On receiving the response the last prompt is played completely to the user by the media gateway 102. On receiving this type of RTCP APP Packet, the Media gateway 102 may start playing whatever is buffered, e.g. no need to wait for the buffer to be filled with a pre-filling amount. The proposed RTCP APP packet issued by the media server 105 to the Media gateway 102. The direction is from media server 105 to the Media gateway 102. The subtype is b00000, Name is PEOD representing Prompt End of Data and timestamp of RTP Packet is the timestamp (in network order) of the End of Data (EOD) packet.

In some cases, there could be some race conditions between CLJB and PEOD, e.g. PEOD followed by CLJB or vice versa. In the first example case, Media gateway 102 has received PEOD but has not played to the end of data yet while receiving CLJB. Media gateway 102 should stop playing due to Barge-in and notify the media server 105. In the second case, the Media gateway 102 has received CLJB followed by PEOD. Media gateway 102 should still stop playing due to CLJB received.

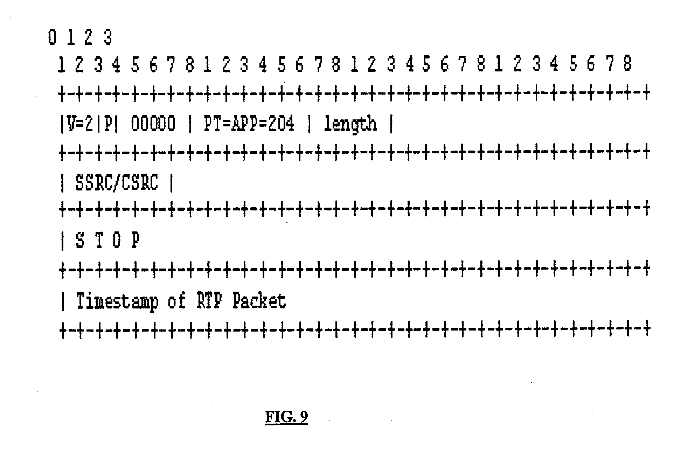

FIG. 9 illustrates an example for RTCP APP packet for Media gateway response to barge-in, according to embodiments as disclosed herein. After the Media gateway 102 has received an RTCP APP packet notifying a barge-in event, the Media gateway 102 may process the event accordingly, e.g. flush the data, and notify the media server 105 when the processing is done. In proposed RTCP App Packet for the media server's 105 barge-in, direction is from Media gateway 102 to the media server 105. The subtype is b00000 which refers to barge-in as the stopped reason. By RFC 1889, subtype may be used as a subtype to allow a set of APP packets to be defined under one unique name, or for any application-dependent data. Therefore, it is now being utilized as the stopped reason for the media server 105. The name is STOP and timestamp of RTP packet is the timestamp (in network order) of the last packet sent just before processing the barge-in event.

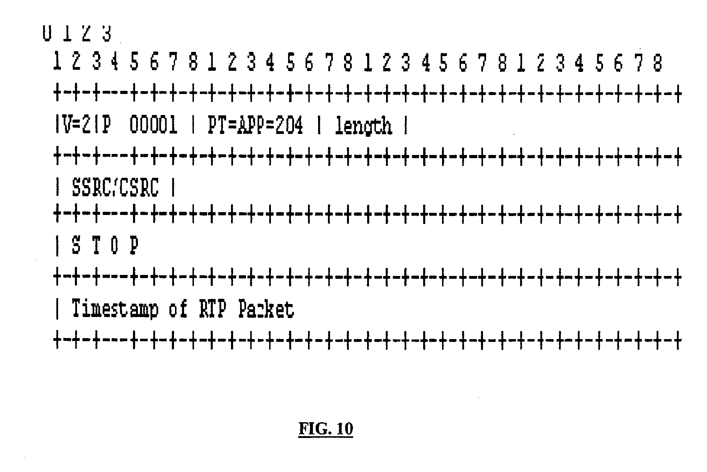

FIG. 10 an example for RTCP APP packet for Media gateway response to prompt end of data, according to embodiments as disclosed herein. When the Media gateway 102 receives an RTCP APP packet notifying a prompt end of data event, the Media gateway 102 would process the event accordingly, e.g. play until the data buffer is empty, and notify the media server 105 after the last packet is sent. The proposed RTCP APP packet for the media server 105 end of data's direction is from Media gateway 102 to the media server 105. The subtype is b00001 which refers to end of data as the stopped reason. The name is STOP and timestamp of RTP packet is the timestamp (in network order) of the last packet played.

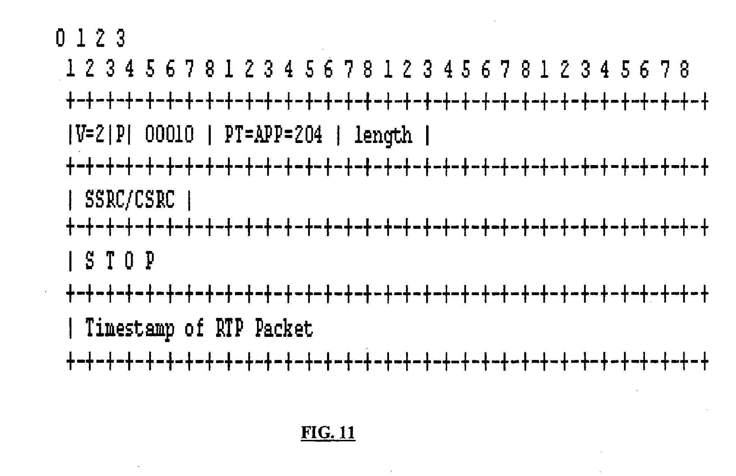

FIG. 11 illustrates an example for RTCP APP packet for Media gateway time out, according to embodiments as disclosed herein. The Media gateway 102 may send a STOP event if the Dialogic buffer 507 becomes empty and a PEOD message has not been received from the MCP 612 after a timeout period. This may inform the MCP 612 that the Media gateway 102 has seen a pause in RTP packet flow and assumed EOD. In the RTCP APP packet the direction is from Media gateway 102 to the media server 105. The subtype is b00010 which refers to end of data timeout. The name is STOP and timestamp of the RTP packet is the timestamp (in network order) of the last packet played.

The embodiments disclosed herein can be implemented through at least one software program running on at least one hardware device and performing network management functions to control the network elements. The network elements shown in Fig. 1, 5 and 6 include blocks which can be at least one of a hardware device, or a combination of hardware device and software module.

The embodiment disclosed herein specifies a system for reducing latency in IP networks. The mechanism allows eliminating the effects of jitter in media stream and thus reducing the latency involved in media by providing a system thereof. Therefore, it is understood that the scope of the protection is extended to such a program and in addition to a computer readable means having a message therein, such computer readable storage means contain program code means for implementation of one or more steps of the method, when the program runs on a server or mobile device or any suitable programmable device. The method is implemented by hardware device which can be programmed including e.g. any kind of computer like a server or a personal computer, or the like, or any combination thereof, e.g. one processor and two FPGAs. The device may also include means which could be e.g. hardware means like e.g. an ASIC, or a combination of hardware and software means, e.g. an ASIC and an FPGA, or at least one microprocessor and at least one memory with software modules located therein. Thus, the means are at least one hardware means and/or at least one software means. Alternatively, the invention may be implemented on different hardware devices, e.g. using a plurality of CPUs.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein can be practiced with modification within the scope of the claims as described herein.

## Claims

1. A method for improving latency in an Internet Protocol IP network comprising an application server (104), a media server (105) and a media gateway (102), this media server (105) and this media gateway (102) respectively comprising jitter buffers; this method comprising the steps of:
- playing a media stream on a media server (105),
- a user entering (201, 501, 601) an input to perform an action on the media stream,
- a media gateway (102) receiving (501, 601) user's input,
- sending user's input (202, 502, 602) from the media gateway (102) to the media server (105),
- then sending (203, 603) the user's input from the media server (105) to the application server (104) to check (204, 604) whether the settings on the application server (104) allow to perform said action on the media stream,
- if the settings on the application server (104) allow to perform said action on the media stream, sending (206, 503, 606) an instruction, from the application server (104) to the media server (105), to perform said action on the media stream,
- if media server (105) receives an instruction to perform said action on the media stream, then sending (207, 503, 606) a RTCP APP packet from the media server (105) to the media gateway (102), this packet requiring to perform the action,
- on receiving the RTCP APP packet, the media gateway (102) performing (208, 504, 608) the required action on the media stream; further comprising the steps of:
- flushing (502, 609) the jitter buffer of the media server (105) if the settings on the application server (104) allow to perform said action on the media stream,
- and flushing (505, 610) the jitter buffer of the media gateway (102) on receiving said RTCP APP packet.

2. The method as in claim 1, wherein said user input action is at least one of pause, stop, forward, clear.

3. The method as in claim 1, wherein said media stream is at least one of audio, text or video.

4. The method as in claim 1, wherein hotword process is employed when said input is audio.

5. The method as in claim 1, wherein said RTCP packet structure comprises:
packet name;
application dependent data; and
timestamp of said RTCP packet.

6. The method as in claim 5, wherein capabilities are added in the form of attributes.

7. The method as in claim 5, wherein said timestamp is used to categorize if the media stream is new media stream or old media stream.

8. A media server (105) for improving latency in an Internet Protocol IP network, this network further comprising an application server (104), and a media gateway (102), the media server and the media gateway respectively comprising jitter buffers; this media server (105) comprising:
- means for playing a media stream,
- means for receiving a user's input (202, 502, 602) from the media gateway (102),
- means for sending (203, 603) the received user's input to the application server (104) to check (204) whether the settings on the application server (104) allow to perform said action on the media stream,
- means for receiving (206, 503, 606) an instruction, from the application server (104) to the media server (105), to perform said action on the media stream,
- means for sending (207) a RTCP APP packet from the media server (105) to the media gateway (102), this packet requiring to perform the action and to clear the jitter buffer of the media gateway, if the media server receives (206, 503, 606) an instruction to perform said action on the media stream,
further comprising means for flushing its jitter buffer if it receives (206, 503, 606) an instruction to perform said action on the media stream.

9. A media gateway (102) for improving latency in an Internet Protocol IP network, this network further comprising an application server (104), and a media server (105), the media server and the media gateway respectively comprising jitter buffers; this media gateway (102) comprising means for receiving user's input to perform an action on a media stream played on the media server, for sending the user's input to the media server and for receiving (207, 503, 606) a RTCP APP packet from the media server (105), this packet requiring to perform the action on the media stream;
further comprising means for flushing its jitter buffer, on receiving said RTCP APP packet.

## Patentansprüche

1. Verfahren zur Verbesserung der Latenz in einem Internetprotokoll- bzw. IP-Netzwerk, welches einen Anwendungsserver (104), einen Media-Server (105) und ein Media-Gateway (102) umfasst, wobei der besagte Media-Server (105) und das besagte Media-Gateway (102) jeweils Jitter-Puffer umfassen; wobei das besagte Verfahren die folgenden Schritte umfasst:
- Abspielen eines Medienstroms auf einem Media-Server (105),
- Eingeben (201, 501, 601), durch einen Benutzer, einer Eingabe für die Durchführung einer Aktion auf dem Medienstrom,
- Empfangen (501, 601), an dem Media-Gateway (102), der Eingabe des Benutzers,
- Senden der Eingabe des Benutzers (202, 502, 602) von dem Media-Gateway (102) an den Media-Server (105),
- anschließendes Senden (203, 603) der Eingabe des Benutzers von dem Media-Server (105) an den Anwendungsserver (104), um zu überprüfen (204, 604), ob die Einstellungen auf dem Anwendungsserver (104) das Durchführen der besagten Aktion auf dem Medienstrom ermöglichen,
- wenn die Einstellungen auf dem Anwendungsserver (104) das Durchführen der besagten Aktion auf dem Medienstrom ermöglichen, Senden (206, 503, 606) einer Anweisung zur Durchführung der besagten Aktion auf dem Medienstrom von dem Anwendungsserver (104) an den Media-Server (105),
- wenn der Media-Server (105) eine Anweisung zur Durchführung der besagten Aktion auf dem Medienstrom empfängt, anschließendes Senden (207, 503, 606) eines RTCP-APP-Pakets von dem Media-Server (105) an das Media-Gateway (102), wobei das besagte Paket die Durchführung der Aktion anfordert,
- nach Empfang des RTCP-APP-Pakets, Durchführen (208, 504, 608), durch das Media-Gateway (102), der angeforderten Aktion auf dem Medienstrom
weiterhin die folgenden Schritte umfassend:
- Leeren (502, 609) des Jitter-Puffers des Media-Servers (105), wenn die Einstellungen auf dem Anwendungsserver (104) das Durchführen der besagten Aktion auf dem Medienstrom ermöglicht,
- und Leeren (505, 610) des Jitter-Puffers des Media-Gateways (102) nach Empfangen des besagten RTCP-APP-Pakets.

2. Verfahren nach Anspruch 1, wobei die besagte vom Benutzer eingegebene Aktion mindestens eine der folgenden ist: Pause, Stop, Vorwärts, Löschen.

3. Verfahren nach Anspruch 1, wobei die besagte vom Benutzer eingegebene Aktion mindestens eine der folgenden ist: Audio, Text oder Video.

4. Verfahren nach Anspruch 1, wobei ein Hotword-Prozess angewendet wird, wenn die besagte Eingabe Audio lautet.

5. Verfahren nach Anspruch 1, wobei die Struktur des besagten RTCP-Pakets umfasst:
Name des Pakets;
anwendungsabhängige Daten; und
Zeitstempel des besagten RTCP-Pakets.

6. Verfahren nach Anspruch 5, wobei die Fähigkeiten in der Form von Attributen hinzugefügt werden.

7. Verfahren nach Anspruch 5, wobei der besagte Zeitstempel verwendet wird, um zu kategorisieren, ob der Medienstrom ein neuer Medienstrom oder ein alter Medienstrom ist.

8. Media-Server (105) zur Verbesserung der Latenz in einem Internetprotokoll- bzw. IP-Netzwerk, wobei das besagte Netzwerk einen Anwendungsserver (104) und ein Media-Gateway (102) umfasst, wobei der Media-Server und das Media-Gateway jeweils Jitter-Puffer umfassen; wobei der besagte Media-Server (105) umfasst:
- Mittel zum Abspielen eines Medienstroms,
- Mittel zum Empfangen der Eingabe eines Benutzers (202, 502, 602) von dem Media-Gateway (102),
- Mittel zum Senden (203, 603) der empfangenen Eingabe des Benutzers an den Anwendungsserver (104), um zu überprüfen (204), ob die Einstellungen auf dem Anwendungsserver (104) das Durchführen der besagten Aktion auf dem Medienstrom ermöglichen,
- Mittel zum Empfangen (206, 503, 606) einer Anweisung zur Durchführung der besagten Aktion auf dem Medienstrom von dem Anwendungsserver (104) an den Media-Server (105),
- Mittel zum Senden (207) eines RTCP-APP-Pakets von dem Media-Server (105) an das Media-Gateway (102), wobei das besagte Paket die Durchführung der Aktion und das Löschen des Jitter-Puffers an dem Media-Gateway anfordert, wenn der Media-Server eine Anweisung zur Durchführung der besagten Aktion auf dem Medienstrom empfängt (206, 503, 606),
weiterhin umfassend Mittel zum Leeren seines Jitter-Puffers, wenn er eine Anweisung zur Durchführung der besagten Aktion auf dem Medienstrom empfängt (206, 503, 606).

9. Media-Gateway (102) zur Verbesserung der Latenz in einem Internetprotokoll- bzw. IP-Netzwerk, wobei das besagte Netzwerk einen Anwendungsserver (104) und einen Media-Server (105) umfasst, wobei der besagte Media-Server und das besagte Media-Gateway jeweils Jitter-Puffer umfassen; wobei das besagte Media-Gateway (102) Mittel zum Empfangen einer Eingabe des Benutzers für die Durchführung einer Aktion auf einem auf dem Media-Server abgespielten Medienstrom, zum Senden der Eingabe des Benutzers an den Media-Server und zum Empfangen (207, 503, 606) eines RTCP-APP-Pakets von dem Media-Server (105) umfasst, wobei das besagte Paket die Durchführung der Aktion auf dem Medienstrom anfordert;
weiterhin umfassend Mittel zum Leeren seines Jitter-Puffers nach Empfang des besagten RTCP-APP-Pakets.

## Revendications

1. Procédé pour améliorer la latence dans un réseau de protocole Internet IP comprenant un serveur d'application (104), un serveur multimédia (105) et une passerelle multimédia (102), ce serveur multimédia (105) et cette passerelle multimédia (102) comprenant respectivement des tampons de gigue ; ce procédé comprenant les étapes suivantes
- lire un flux multimédia sur un serveur multimédia (105),
- un utilisateur entre (201, 501, 601) une entrée pour exécuter une action sur le flux multimédia,
- une passerelle multimédia (102) reçoit (501 ; 601) une entrée de l'utilisateur,
- envoyer une entrée de l'utilisateur (202, 502, 602) à partir de la passerelle multimédia (102) au serveur multimédia (105),
- puis envoyer (203, 603) l'entrée de l'utilisateur à partir du serveur multimédia (105) au serveur d'application (104) pour vérifier (204 ; 604) si les paramètres dans le serveur d'application (104) permettent d'exécuter ladite action sur le flux multimédia,
- si les paramètres dans le serveur d'application (104) permettent d'exécuter ladite action sur le flux multimédia, envoyer (206, 503, 606) une instruction, à partir du serveur d'application (104) au serveur multimédia (105), d'exécution de ladite action sur le flux multimédia,
- si le serveur multimédia (105) reçoit une instruction d'exécution de ladite action sur le flux multimédia, envoyer alors (207, 503, 606) un paquet RTCP APP à partir du serveur multimédia (105) à la passerelle multimédia (102), ce paquet exigeant d'exécuter l'action,
- à réception du paquet RTCP APP, la passerelle multimédia (102) exécute (208, 504, 608) l'action requise sur le flux multimédia ; comprenant en outre les étapes suivantes :
- vider (502, 609) le tampon de gigue du serveur multimédia (105) si les paramètres dans le serveur d'application (104) permettent d'exécuter ladite action sur le flux multimédia,
- et vider (505, 610) le tampon de gigue de la passerelle multimédia (102) à réception dudit paquet RTCP APP.

2. Procédé selon la revendication 1 dans lequel ladite action d'entrée de l'utilisateur est au moins une action parmi pause, arrêt, transfert, suppression.

3. Procédé selon la revendication 1 dans lequel ledit flux multimédia est au moins un flux audio, texte ou vidéo.

4. Procédé selon la revendication 1, dans lequel un processus de mot-clé est utilisé lorsque ladite entrée est une entrée audio.

5. Procédé selon la revendication 1, dans lequel ladite structure de paquet RTCP comprend :
nom de paquet ;
données dépendantes de l'application, et
estampille temporelle dudit paquet RTCP.

6. Procédé selon la revendication 5, dans lequel les capacités sont ajoutées sous la forme d'attributs.

7. Procédé selon la revendication 5, dans lequel ladite estampille temporelle est utilisée pour déterminer si le flux multimédia est un nouveau flux multimédia ou un ancien flux multimédia.

8. Serveur multimédia (105) pour améliorer la latence dans un réseau de protocole Internet IP, ce réseau comprenant en outre un serveur d'application (104), et une passerelle multimédia (102), le serveur multimédia et la passerelle multimédia comprenant respectivement des tampons de gigue ; ce serveur multimédia (105) comprenant :
- des moyens pour lire un flux multimédia,
- des moyens pour recevoir une entrée de l'utilisateur (202, 502, 602) à partir de la passerelle multimédia (102),
- des moyens pour envoyer (203, 603) l'entrée de l'utilisateur reçue au serveur d'application (104) pour vérifier (204) si les paramètres dans le serveur d'application (104) permettent d'exécuter ladite action sur le flux multimédia,
- des moyens pour recevoir (206, 503, 606) une instruction, à partir du serveur d'application (104) au serveur multimédia (105), d'exécution de ladite action sur le flux multimédia,
- des moyens pour envoyer (207) un paquet RTCP APP à partir du serveur multimédia (105) à la passerelle multimédia (102), ce paquet exigeant d'exécuter l'action et de supprimer le tampon de gigue de la passerelle multimédia, si le serveur multimédia reçoit (206, 503, 606) une instruction d'exécution de ladite action sur le flux multimédia,
- comprenant en outre des moyens pour vider son tampon de gigue s'il reçoit (206, 503, 606) une instruction d'exécution de ladite action sur le flux multimédia.

9. **Passerelle multimédia** (102) pour améliorer la latence dans un réseau de protocole Internet IP, ce réseau comprenant en outre un serveur d'application (104), et un serveur multimédia (105), le serveur multimédia et la passerelle multimédia comprenant respectivement des tampons de gigue ; cette passerelle multimédia (102) comprenant des moyens pour recevoir une entrée de l'utilisateur pour exécuter une action sur un flux multimédia lu sur le serveur multimédia, pour envoyer l'entrée de l'utilisateur au serveur multimédia et pour recevoir (207, 503, 606), un paquet RTCP APP à partir du serveur multimédia (105), ce paquet exigeant d'exécuter l'action sur le flux multimédia ;
comprenant en outre des moyens pour vider son tampon de gigue, à réception dudit paquet RTCP APP.
